# EUROPEAN PATENT SPECIFICATION

(11) **EP 1 006 380 B1**
(45) Date of publication and mention of the grant of the patent: **03.04.2002**
(21) Application number: 99203666.5
(22) Date of filing: 05.11.1999
(51) Int. Cl.: G02B 6/38, H01R 13/627

(54) **Electrical and/or optical connector**
Elektrischer und/oder optischer Steckverbinder
Connecteur électrique et/ou optique

(30) Priority: 03.12.1998 GB 9826549
(43) Date of publication of application: 07.06.2000
(73) Proprietor: Delphi Technologies, Inc., Troy, MI 48007 (US)
(72) Inventor: Halbach, Paul Gerherd, 42369 Wuppertal (DE); Haack, Albrecht, 42369 Wuppertal (DE); Sikora, Andreas, 58099 Hagen (DE)
(74) Representative: Denton, Michael John

(56) References cited:
- EP-A- 0 593 981
- DE-U- 8 525 560
- US-A- 4 355 862
- US-A- 4 813 760
- PATENT ABSTRACTS OF JAPAN vol. 1997, no. 02, 28 February 1997 (1997-02-28) & JP 08 262271 A (HIROSE ELECTRIC CO LTD;HITACHI CABLE LTD), 11 October 1996 (1996-10-11)

## Description

### Technical Field

The present invention relates to an electrical and/or optical connector with a locking arrangement, and to a connection assembly including the electrical and/or optical connector.

### Background of the Invention

Known electrical and/or optical connectors are susceptible to tolerance problems, and hence problems achieving a good connection, when mated with a corresponding connector. Such a problem is especially known where a seal is required between the connectors, and/or where the electrical or optical components within the connector may move during transportation and/or installation.

The preamble of claim 1 is based upon the connector disclosed in DE 8525560.2.

### Summary of the Invention

It is an object of the present invention to overcome the above mentioned problem.

An electrical and/or optical connector in accordance with the present invention is characterised by the features specified in Claim 1.

The present invention provides a connector having a locking device which can lock a dummy connector or a corresponding connector in place. The locking device exerts a force on the dummy connector or the corresponding connector in the mating direction which overcomes manufacturing tolerances, allows for the use of a seal, and holds the components in position during transportation and/or installation.

The present invention also includes a connection assembly as specified in Claim 4.

### Brief Description of the Drawings

The present invention will now be described, by way of example, with reference to the accompanying drawings, in which:-
Figure 1 is a perspective view of an electrical and/or optical connector in accordance with the present invention;
Figure 2 is a perspective view of the locking device of the connector of Figure 1;
Figure 3 is a perspective view of a dummy connector for mating with the connector of Figure 1;
Figure 4 is a perspective view of the connector of Figure 1 mated and locked with the dummy connector of Figure 3; and
Figures 5 to 7 are perspective views of the stages of mating of the connector of Figure 1 with a corresponding connector for a connection assembly in accordance with the present invention.

### Description of the Preferred Embodiment

Referring to the drawings, an electrical and/or optical connector 10 in accordance with the present invention comprises a housing 12 with a locking device 14. The housing 12 has electrical contacts and/or optical devices (not shown) mounted inside the housing. The housing 12 has a front wall 78 with a face 16 having an opening 18 to a bore 20 for receiving a corresponding connector 22. The bore 20 extends in an axial direction A which is the same as the mating direction. The electrical and/or optical components (not shown) mounted inside the housing 12 are positioned in the bore 20 for mating with corresponding components (not shown) of the corresponding connector 22. Adjacent the front face 16, the housing 12 has a pair of channels 24, each of which has an opening 26 through a side wall 28 of the housing. The channels 24 extend in a direction substantially parallel to one another, are positioned on opposite sides of the bore 20, and each has an opening 30 into the bore. The openings 30 extend to, and open through, the front face 16 of the housing 12 to define a pair of opposed grooves 62 in the bore 20 at the front face. The grooves 62 extend in a direction which is substantially parallel to the axial direction A. The channels 24 extend in a direction which is substantially perpendicular to the axial direction A.

The locking device 14 is substantially U-shaped and includes a base member 32 and a pair of arms 34. In use, the arms 34 extend through the openings 26 in the side wall 28 of the housing 12 and make a sliding fit in the channels 24. Each arm 34 includes a resilient finger 36 which is biased inwardly towards the other arm and which has a free end 38 directed away from the base member 32. The free end 38 of each finger 36 is preferably positioned adjacent the free end 40 of each arm 34. Between the finger 36 and the base member 32, each arm 34 has a rigid rib 42 extending along the arm. Each rib 42 is directed inwardly towards the other arm 34 and has a shoulder 44 directed away from the base member 32. The shoulder 44 is positioned between the base member 32 and the free end 38 of each finger 36 on each arm 34. Each arm 34 may also have, on the opposite side to the rib 42, a groove 46 with a latch tab 48 therein and a latch shoulder 50 adjacent the free end 40 of the arm.

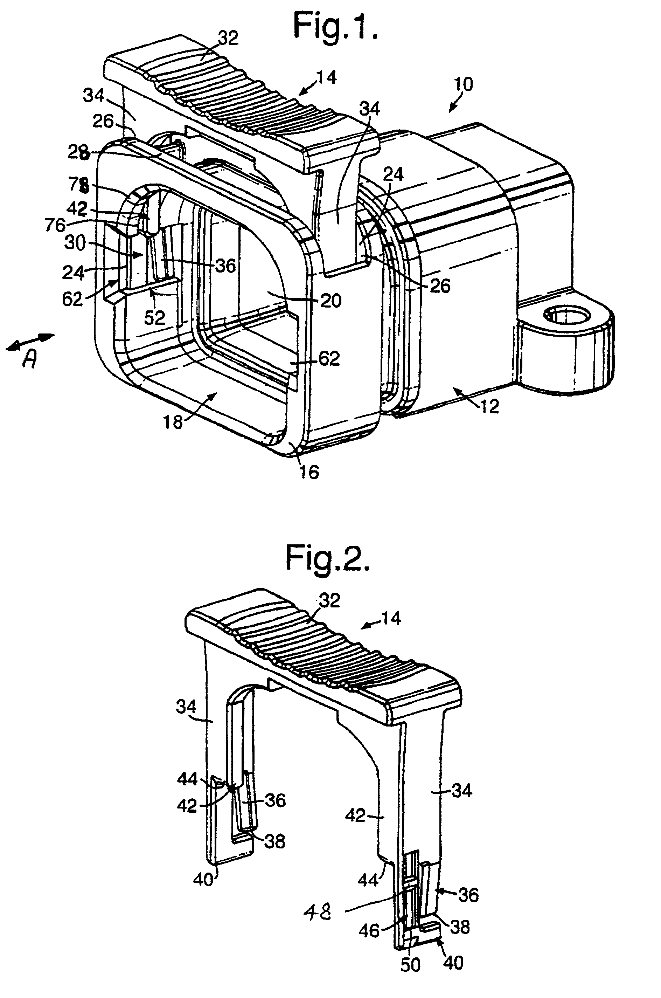

As mentioned above, each arm 34 is positioned in one of the channels 24 in the housing 12. The base member 32 of the locking device 14 is pushed towards the side wall 28 of the housing 12 until the resilient fingers 36 reach the openings 30 into the bore 20. The free end 38 of each finger 36 then engages an edge 52 of the opening 30 to prevent further movement of the base member 32 towards the side wall 28 of the housing 12, as shown in Figure 1. In order to substantially prevent unintentional removal of the locking device 14 from this pre-assembly position in the housing 12, a latch tab (not shown) in each channel 24 may engage the latch shoulder 50 of the groove 46 in each arm 34.

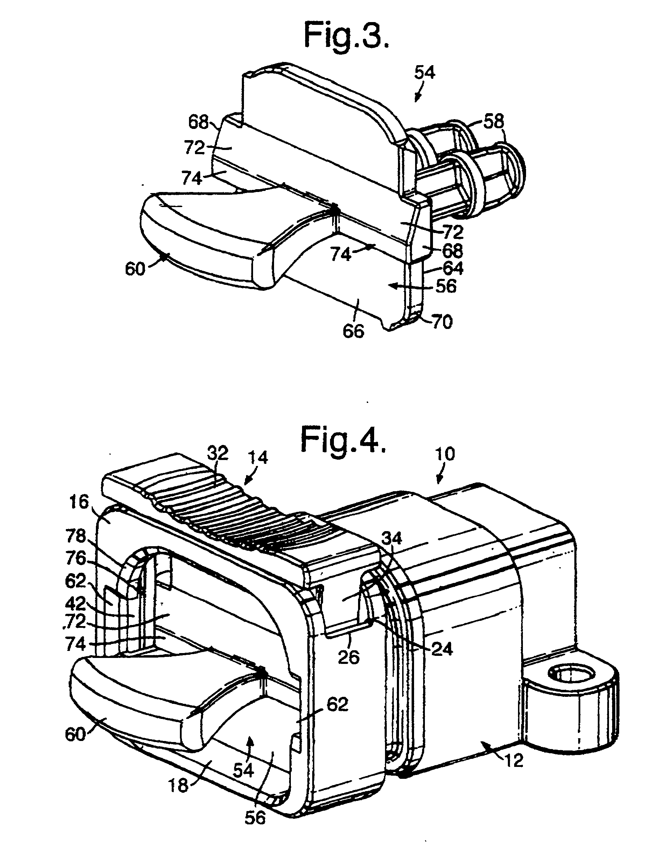

The operation of the locking device 14 will be further explained with respect to the dummy connector 54 shown in Figure 3. The dummy connector 54 has an end wall 56 with a pair of dummy optical ferrules 58 extending from one side 64 of the end wall. The use of dummy optical ferrules 58 on the dummy connector 54 is used when the connector 10 has a pair of corresponding optical devices (not shown) positioned in the bore 20 of the housing 12. Other arrangements for the one side 64 of the dummy connector may be used dependent on the components mounted in the bore 20 of the housing 12. A handle 60 is attached to the other side 66 of the end wall 56. The end wall 56 has a pair of tabs 68 extending outwardly from the edge 70 of the end wall. The tabs 68 are substantially opposite one another. Each tab 68 has a chamfered surface 72 on the side adjacent the other side 66 of the end wall 56.

The dummy connector 54 is mated with the connector 10 by sliding the tabs 68 into the grooves 62 in the front face 16 and the bore 20 of the housing 12. The tabs 68 engage the resilient fingers 36 on the arms 34 of the locking device 14. As the dummy connector 54 is pushed-further into the bore 20, the tabs 68 push the fingers 36 outwardly to disengage the free ends 38 of the fingers 36 from the edge 52 of the openings 30. The base member 32 of the locking device 14 can then be pushed towards the side wall 28 of the housing 12 such that the shoulder 44 on the rib 42 of each arm 34 engages the chamfered surface 72 on each tab 68. Further movement of the base member 32 towards the side wall 28 pushes the shoulder 44 across the chamfered surface 72 to drive the dummy connector 54 further into the bore 20. In the fully locked position of the locking device 14 (as shown in Figure 4), the rib 42 on each arm 34 is positioned between the outer surface 74 of each tab 68 and an inner surface 76 of the front wall 78 defining the front face 16 of the housing to exert a biasing force on the dummy connector 54 in the mating direction. Also, in the fully locked position, the shoulder 44 on each rib 42 may engage the edge 52 of each opening 30 to substantially prevent over insertion of the locking device 14. The latch tab (not shown) in each channel 24 may engage the latch tab 48 in each groove 46 in each arm 34 to substantially prevent unintentional movement of the locking device 14 from the fully locked position. The dummy connector 54 may be used during transportation of the connector 10 (for providing protection to the components in the bore 20, and/or during mounting of the housing 12, for example, to a printed circuit board (not shown). In the latter case, the dummy connector 54 helps to maintain the components of the connector 10 in correct position and alignment whilst the components are being connected to the printed circuit board.

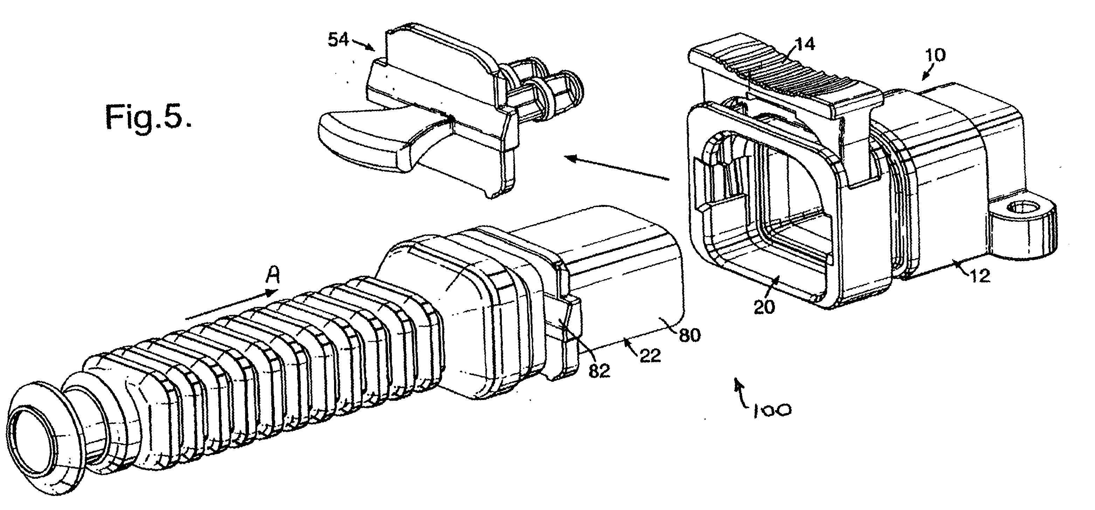

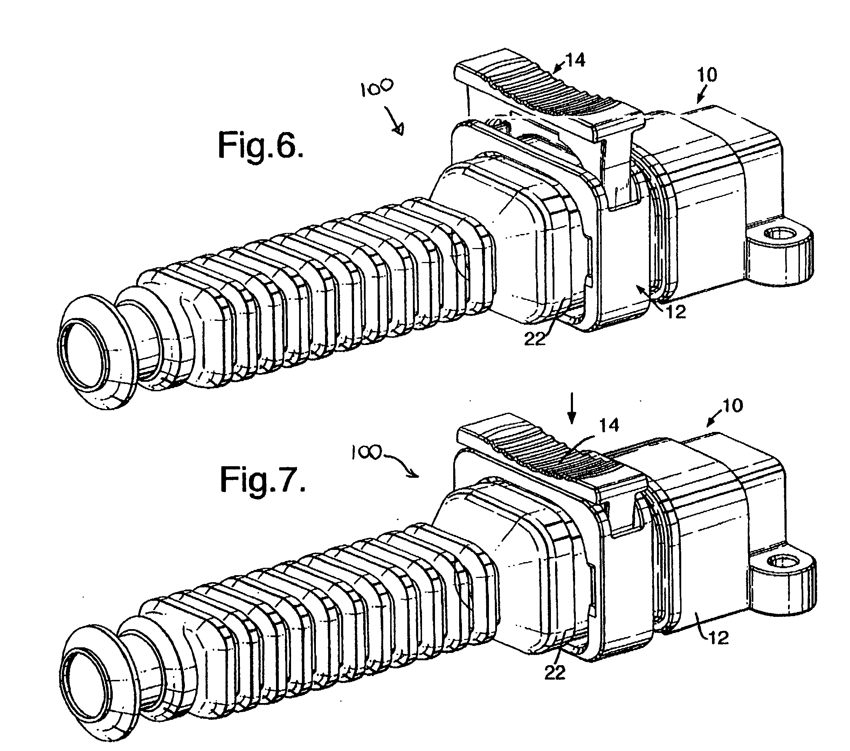

Figures 5 to 7 show various stages during mating of the connector 10 with the corresponding connector 22 for a connection assembly 100 in accordance with the present invention. In Figure 5, the base member 32 of the locking device 14 is pulled away from the side wall 28 of the housing 12 to the pre-assembly position. The dummy connector 54 is then removed. The corresponding connector 22 has a housing 80 which makes a sliding fit in the bore 20 of the housing 12 of the connector 10, and optical ferrules (not shown) which correspond in position and size to the dummy optical ferrules 58 on the dummy connector 54. The housing 80 of the corresponding connector 22 has tabs 82 which are substantially identical to the tabs 68 on the end wall 56 of the dummy connector 54. The housing 80 of the corresponding connector 22 is pushed into the bore 20 and the tabs 82 make a sliding fit in the grooves 62, as shown in Figure 6. The tabs 82 engage the fingers 36 of the locking device 14, as described above with respect to the dummy connector 54, to allow the corresponding connector 22 to be pushed further into the bore 20 and then allow the locking device to be moved to the fully locked position.

The present invention provides a connector 10 with a locking device 14 in which the locking device can be pre-assembled with the housing 12 of the connector and retained in the pre-assembly position. The use of the ribs 42 on the locking device 14 to push the corresponding connector 22 to the fully mated position assists in the mating process. Further, the ribs 42 then exert a biasing force on the corresponding connector 22 in the mating direction to ensure and maintain a good connection between the electrical and/or optical components which mate inside the housings 12,80 of each connector 10,22. This arrangement has particular benefit when mating optical ferrules in one connector with electrical/optical devices in the other connector as the locking member helps to overcome any manufacturing tolerances, which may be exaggerated when a seal is positioned between the connectors 10,80.

## Claims

1. An electrical and/or optical connector comprising a housing (12) and a locking device (14); the housing having a front wall (78) and a side wall (28); an opening (18) in the font wall opening into a bore (20) which extends in an axial direction (A); a pair of channels (24) formed in the housing adjacent but spaced from the front wall, the channels extending in a direction substantially perpendicular to the axial direction and substantially parallel to one another, each channel having an opening (26) in the side wall and an opening (30) into the bore; and a pair of grooves (62) formed in the inside surface of the bore, each groove extending substantially in the axial direction between the front wall and the opening of a respective channels whereby to define an edge (52) at each opening facing towards the side wall; the locking device being substantially U-shaped and having a transverse base member (32) and a pair of depending arms (34) **characterised by** each arm having a resilient finger (36) inclined towards the other arm and having a free end (38) pointing away from the base member, and each arm having a rigid rib (42) extending along the inside of the arm with the end of the rib defining a shoulder (44) facing away from the base member and positioned between the free end of the resilient finger and the base member; the arms of the locking member extending through the openings (26) in the side wall and making a sliding fit in the channels in the housing, with the free ends (38) of the resilient fingers (36) engaging corresponding edges (52) at the openings (30) into the bore in a pre-assembled position of the locking member, and with the rigid ribs extending across their corresponding grooves in a fully assembled position of the locking member.

2. An electrical and/or optical connector as claimed in Claim 1, wherein the free end (38) of each finger (36) is positioned adjacent the free end (40) of each arm (34).

3. An electrical and/or optical connector as claimed in Claim 1 or Claim 2, wherein each arm (34) has a latch tab (48) and a latch shoulder (50) formed on the opposite side to the rib (42) for engaging a corresponding latch tab in each channel (24) in the fully assembled position and the pre-assembled position, respectively, of the locking member (14).

4. An electrical and/or optical connection assembly comprising an electrical and/or optical connector (10) as claimed in any one of Claims 1 to 3; and a corresponding connector (22); wherein the corresponding connector includes a housing (80) capable of making a sliding fit in the bore (20) and having a pair of tabs (82) extending from opposed sides of the housing and capable of making a sliding fit in the grooves (62), the tabs being engageable with the resilient fingers (36) to disengage the fingers from the edges (52) of the openings (30), and having a surface engageable by the rib (42) to secure the connectors together.

5. An electrical and/or optical connection assembly as claimed in Claim 4, wherein the surface of each tab (82) engageable by the rib (42) is chamfered.

## Patentansprüche

1. Elektrischer und/oder optischer Verbinder, der ein Gehäuse (12) und eine Verriegelungseinrichtung (14) umfasst, wobei das Gehäuse aufweist: eine Vorderwand (78) und eine Seitenwand (28); eine Öffnung (18) in der Vorderwand, die sich in eine Bohrung (20) hinein öffnet, die sich in einer axialen Richtung (A) erstreckt; zwei Kanäle (24), die in dem Gehäuse benachbart zur Vorderwand aber beabstandet von dieser gebildet sind, wobei sich die Kanäle in einer Richtung im Wesentlichen senkrecht zur axialen Richtung und im Wesentlichen parallel zueinander erstrecken, wobei jeder Kanal eine Öffnung (26) in der Seitenwand und eine Öffnung (30) in die Bohrung hinein aufweist; und zwei Nuten (62), die in der Innenfläche der Bohrung gebildet sind, wobei sich jede Nut im Wesentlichen in der axialen Richtung zwischen der Vorderwand und der Öffnung eines jeweiligen Kanals erstreckt, wodurch ein Rand (52) an jeder Öffnung gebildet ist, der der Seitenwand zugewandt ist; wobei die Verriegelungseinrichtung im Wesentlichen U-förmig ist und ein quer verlaufendes Grundelement (32) und zwei abstehende Arme (34) aufweist, **dadurch gekennzeichnet, dass** jeder Arm einen elastischen Finger (36) aufweist, der in Richtung des anderen Arms schräg gestellt ist und ein freies Ende (38) besitzt, das von dem Grundelement weg zeigt, und wobei jeder Arm eine steife Rippe (42) aufweist, die sich längs der Innenseite des Arms erstreckt, wobei das Ende der Rippe eine Schulter (44) aufweist, die von dem Grundelement weg gewandt ist und zwischen dem freien Ende des elastischen Fingers und dem Grundelement angeordnet ist; wobei die Arme des Verriegelungselements sich durch die Öffnungen (26) in der Seitenwand hindurch erstrecken und einen Schiebesitz in den Kanälen in dem Gehäuse herstellen, wobei die freien Enden (38) der elastischen Finger (36) mit entsprechenden Rändern (52) an den Öffnungen (30) in die Bohrung hinein in einer Lage vor dem Zusammenbau des Verriegelungselements in Eingriff stehen, und wobei die steifen Rippen sich quer durch ihre entsprechenden Nuten in einer vollständig zusammengebauten Lage des Verriegelungselements erstrecken.

2. Elektrischer und/oder optischer Verbinder nach Anspruch 1, wobei das freie Ende (38) jedes Fingers (36) neben dem freien Ende (40) jedes Arms (34) angeordnet ist.

3. Elektrischer und/oder optischer Verbinder nach Anspruch 1 oder Anspruch 2, wobei jeder Arm (34) eine Rastnase (48) und eine Rastschulter (50) aufweist, die an der der Rippe (42) abgewandten Seite gebildet sind, um mit einer entsprechenden Rastnase in jedem Kanal (24) in der vollständig zusammengebauten Lage bzw. der Lage vor dem Zusammenbau des Verriegelungselements (14) in Eingriff zu stehen.

4. Elektrischer und/oder optischer Verbindungsaufbau mit einem elektrischen und/oder optischen Verbinder (10) nach einem der Ansprüche 1 bis 3; und einem entsprechenden Verbinder (22); wobei der entsprechende Verbinder ein Gehäuse (80) umfasst, das einen Schiebesitz in der Bohrung (20) herstellen kann und zwei Nasen (82) aufweist, die sich von entgegengesetzten Seiten des Gehäuses aus erstrecken und einen Schiebesitz in den Nuten (62) herstellen können, wobei die Nasen mit den elastischen Fingern (36) in Eingriff treten können, um die Finger von den Rändern (52) der Öffnungen (30) außer Eingriff zu bringen, und eine Oberfläche aufweisen, mit der die Rippe (42) in Eingriff treten kann, um die Verbinder aneinander zu befestigen.

5. Elektrischer und/oder optischer Verbindungsaufbau nach Anspruch 4, wobei die Oberfläche jeder Nase (82), mit der die Rippe (42) in Eingriff treten kann, angefast ist.

## Revendications

1. Connecteur électrique et/ou optique comprenant un boîtier (12) et un dispositif de verrouillage (14) ; le boîtier ayant une paroi frontale (78) et une paroi latérale (28); une ouverture (18) dans la paroi frontale ouvrant dans un perçage (20) qui s'étend dans une direction axiale (A) ; une paire de canaux (24) formés dans le boîtier, adjacents à, mais écartés de la paroi frontale, les canaux s'étendant dans une direction sensiblement perpendiculaire à la direction axiale et sensiblement parallèle l'un par rapport à l'autre, chaque canal ayant une ouverture (26) dans la paroi latérale et une ouverture (30) dans le perçage; et une paire d'encoches (62) formées dans la surface interne du perçage, chaque encoche s'étendant sensiblement dans la direction axiale entre la paroi frontale et l'ouverture d'un canal respectif afin de définir un bord (52) à chaque ouverture en face de la paroi latérale ; le dispositif de verrouillage étant sensiblement en forme de U et ayant un élément de base transversal (32) et une paire de bras correspondants (34), **caractérisé par** chaque bras ayant un doigt élastique (36) incliné en direction de l'autre bras et ayant une extrémité libre (38) pointant vers l'extérieur de l'élément de base, et chaque bras ayant une nervure rigide (42) s'étendant le long de l'intérieur du bras avec l'extrémité de la nervure définissant un épaulement (44) en face de l'élément de base et positionné entre l'extrémité libre du doigt élastique et l'élément de base ; les bras de l'élément de verrouillage s'étendant au travers des ouvertures (26) de la paroi latérale et réalisant un ajustement glissant dans les canaux dans le boîtier, avec les extrémités libres (38) des doigts élastiques (36) coopérant avec les bords correspondants (52) aux ouvertures (30) dans le perçage dans une position pré-montée de l'élément de verrouillage, et avec les nervures rigides s'étendant au travers de leurs encoches correspondantes dans une position entièrement montée de l'élément de verrouillage.

2. Connecteur électrique et/ou optique selon la revendication 1, dans lequel l'extrémité libre (38) de chaque doigt (36) est positionnée adjacente à l'extrémité libre (40) de chaque bras (34).

3. Connecteur électrique et/ou optique selon la revendication 1 ou 2, dans lequel chaque bras (34) a une languette d'accrochage (48) et un épaulement d'accrochage (50) formés sur le coté opposé de la nervure (42) pour coopérer avec une languette d'accrochage correspondante dans chaque canal (24) dans la position entièrement montée et la position pré-montée, respectivement, de l'élément de verrouillage (14).

4. Montage de connexion électrique et/ou optique comprenant un connecteur électrique et/ou optique (10) selon l'une quelconque des revendications 1 à 3, et un connecteur correspondant (22); dans lequel le connecteur correspondant comprend un boîtier (80) pouvant réaliser un ajustement glissant dans le perçage (20) et ayant une paire de languettes (82) sortant de côtés opposés du boîtier et pouvant réaliser un ajustement glissant dans les encoches (62), les languettes pouvant coopérer avec les doigts élastiques (36) afin de dégager les doigts des bords (52) des ouvertures (30), et ayant une surface pouvant coopérer avec la nervure (42) pour assujettir ensemble les connecteurs.

5. Montage de connexion électrique et/ou optique selon la revendication 4, dans lequel la surface de chaque languette (82) pouvant coopérer avec la nervure (42) est chanfreinée.
